# EUROPEAN PATENT APPLICATION

(11) **EP 3 163 502 A1**
(43) Date of publication of application: **03.05.2017**
(21) Application number: 16195027.4
(22) Date of filing: 21.10.2016
(51) Int. Cl.: G06K 9/00

(54) **METHOD AND DEVICE FOR REGION IDENTIFICATION**

(30) Priority: 30.10.2015 CN 201510726153
(71) Applicant: Xiaomi Inc., Beijing 100085 (CN)
(72) Inventor: LONG, Fei, BEIJING, 100085 (CN); ZHANG, Tao, BEIJING, 100085 (CN); CHEN, Zhijun, BEIJING, 100085 (CN)
(74) Representative: Cougard, Jean-Marie

(57) **Abstract**

A method and device for region identification are provided in the disclosure. The method includes: binarizing (201) a word region, to obtain the binarized word region, wherein the word region includes several words belonging to a same row; calculating (202) a histogram in a vertical direction for the binarized word region, wherein the histogram includes abscissas of pixels in each column and an accumulated value of foreground color pixels of the pixels in each column; and identifying (203) a character region of each of the words in the word region, according to distribution information of accumulated values in the histogram. The disclosure may solve the fact that, in related arts, the accuracy of character region location is relatively low and may obtains an effect that the character region of each word may be accurately located according to the distribution information of accumulated values of foreground color pixels in the histogram.

## Description

### FIELD

The present disclosure generally relates to image processing, and more particularly to a method and device for region identification.

### BACKGROUND

In the field of image processing, before identifying words in an image, a terminal may have to identify a character region of each word firstly.

In related arts, a method for region identification has been provided, including: removing, by a terminal, a background in an image, to extract a foreground image; identifying, with an edge enhancement technology, an edge of each word in the extracted foreground image; and determining a character region of each word according to the identified edge of each word.

In the above solution, accuracy of the determined character region may be relatively low, since the edge enhancement technology may only provide a rough location.

### SUMMARY

In view of the fact that, in related arts, the accuracy of character region location is relatively low, a method and device for region identification are provided in the disclosure.

According to a first aspect of embodiments of the present disclosure, a method for region identification is provided, including: binarizing a word region, to obtain a binarized word region, wherein the word region includes several words belonging to a same row; calculating a histogram in a vertical direction for the binarized word region, wherein the histogram includes abscissas of pixels in each column and an accumulated value of foreground color pixels of the pixels in each column; and identifying a character region of each of the words in the word region, according to distribution information of accumulated values in the histogram.

Additionally, the above identifying step may include: determining several sets of abscissas according to the distribution information of accumulated values in the histogram, wherein each of the several sets of abscissas includes a first abscissa and a second abscissa located on the right side of the first abscissa; wherein accumulated values respectively corresponding to the first abscissa and an abscissa on the right side of and adjacent to the first abscissa are larger than a first threshold, and an accumulated value corresponding to an abscissa on the left side of and adjacent to the first abscissa is smaller than a second threshold; and accumulated values respectively corresponding to the second abscissa and an abscissa on the left side of and adjacent to the second abscissa are larger than the first threshold, and an accumulated value corresponding to an abscissa on the right side of and adjacent to the second abscissa is smaller than the second threshold; and for each of the several sets of abscissas, identifying a pixel column where the first abscissa is located as a left edge of a character region, and identifying a pixel column where the second abscissa is located as a right edge of the character region.

Additionally, the step of determining several sets of abscissas according to the distribution information of accumulated values in the histogram may include: identifying a third abscissa in the histogram according to the distribution information of accumulated values, wherein the third abscissa is an abscissa in the histogram corresponding to a left edge of a character region of the first valid word among the several words, or an abscissa in the histogram corresponding to a right edge of a character region of the last valid word among the several words; and searching, starting with the third abscissa in a predetermined direction and based on the distribution information of accumulated values, the several sets of abscissas.

Additionally, in case that the third abscissa is the abscissa in the histogram corresponding to the left edge of the character region of the first valid word among the several words, the step of searching, starting with the third abscissa in the predetermined direction and based on the distribution information of the accumulated values, the several sets of abscissas includes: for an i^{th} set of abscissas, searching, starting with the first abscissa within the i^{th} set of abscissas in the histogram and in a direction towards right, a fourth abscissa, wherein accumulated values respectively corresponding to the fourth abscissa and an abscissa on the left side of and adjacent to the fourth abscissa are larger than the first threshold, and an accumulated value corresponding to an abscissa on the right side of and adjacent to the fourth abscissa is smaller than the second threshold; wherein 1 ≤ i ≤ n, i is a positive integer of which an initial value is 1, and n is a number of valid words in the several words; and the first abscissa in the first set of abscissas is the third abscissa; determining the fourth abscissa as the second abscissa within the i^{th} set of abscissas; searching, starting with the fourth abscissa in the histogram and in the direction towards right, a fifth abscissa, if i<n, wherein accumulated values respectively corresponding to the fifth abscissa and an abscissa on the right side of and adjacent to the fifth abscissa are larger than the first threshold, and an accumulated value corresponding to an abscissa on the left side of and adjacent to the fifth abscissa is smaller than the second threshold; and setting i to i+1, and determining the fifth abscissa as the first abscissa within the i^{th} set of abscissas.

Alternatively, in case that the third abscissa is the abscissa in the histogram corresponding to a right edge of the character region of the last valid word among the several words, the step of searching, starting with the third abscissa in the predetermined direction and based on the distribution information of accumulated values, the several sets of abscissas includes: for a j^{th} set of abscissas, searching, starting with the second abscissa within the j^{th} set of abscissas in the histogram and in a direction towards left, a sixth abscissa, wherein accumulated values respectively corresponding to the sixth abscissa and an abscissa on the right side of and adjacent to the sixth abscissa are larger than the first threshold, and an accumulated value corresponding to an abscissa on the left side of and adjacent to the sixth abscissa is smaller than the second threshold; 1 ≤ j ≤ n , j is a positive integer of which an initial value is n, and n is a number of valid words in the several words; and the second abscissa within the n^{th} set of abscissas is the third abscissa; determining the sixth abscissa as the first abscissa within the j^{th} set of abscissas; searching, starting with the sixth abscissa in the histogram and in the direction towards left, a seventh abscissa, if j>0, wherein accumulated values respectively corresponding to the seventh abscissa and an abscissa on the left side of and adjacent to the seventh abscissa are larger than the first threshold, and an accumulated value corresponding to an abscissa on the right side of and adjacent to the seventh abscissa is smaller than the second threshold; and setting j to j-1, and determining the seventh abscissa as the second abscissa within the j^{th} set of abscissas.

Alternatively, in case that the third abscissa is the abscissa in the histogram corresponding to the left edge of the character region of the first valid word among the several words, the step of identifying the third abscissa in the histogram according to the distribution information of accumulated values may include: in case that the several words comprise both valid words and invalid words and a first distance between a valid word and an invalid word is larger than a second distance between two adjacent valid words, looking up, starting with a predetermined abscissa in the histogram and in the direction towards left, an interval which is the first interval of which a width is larger than the second distance; and determining, an abscissa located on the right side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or in case that the several words are all valid words, determining, a first one of abscissas located on the left side of the histogram of which the accumulated value of foreground color pixels is larger than the first threshold, as the third abscissas.

Alternatively, in case that the third abscissa is the abscissa in the histogram corresponding to a right edge of the character region of the last valid word among the several words, the step of identifying the third abscissa in the histogram according to the distribution information of accumulated values may include: in case that the several words includes both valid words and invalid words and a first distance between a valid word and an invalid word is larger than a second distance between two adjacent valid words, looking up, starting with a predetermined abscissa in the histogram and in the direction towards right, an interval of which a width is larger than the second distance; and determining, an abscissa located on the left side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or in case that the several words are all valid words, determining, a first one of abscissas located on the right side of the histogram of which the accumulated value of foreground color pixels is larger than the first threshold, as the third abscissas.

Additionally, the method may further include: binarizing a targeted image region, to obtain a binarized targeted image region; calculating, in a horizontal direction, a horizontal histogram for a binarized targeted image region, wherein the horizontal histogram includes: ordinates of pixels in each row and an accumulated value of foreground color pixels of the pixels in each row; determining, according to distribution information of the accumulated values in the horizontal histogram, several sets of ordinates, wherein each of the several sets of ordinates includes a first ordinate and a second ordinate located below the first ordinate; and for each of the several sets of ordinates, identifying a pixel row where the first ordinate is located as an upper edge of a row of words, and identifying a pixel row where the second ordinate is located as a lower edge of the row of words; accumulated values respectively corresponding to the first ordinate and an ordinate on the lower side of and adjacent to the first abscissa are larger than the first threshold, and an accumulated value corresponding to an ordinate on the upper side of and adjacent to the first ordinate is smaller than the second threshold; and accumulated values respectively corresponding to the second ordinate and an ordinate on the upper side of and adjacent to the second abscissa are larger than the first threshold, and an accumulated value corresponding to an ordinate on the lower side of and adjacent to the second abscissa is smaller than the second threshold; and for a k^{th} row in the word region, performing the step of binarizing the word region, wherein m ≥ k ≥ 1, k is a positive integer, and m is a total number of the identified rows.

In one particular embodiment, the steps of the method for region identification are determined by computer program instructions.

Consequently, according to a particular aspect, the invention is also directed to a computer program for executing the steps of a method for region identification as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of embodiments of the present disclosure, a device for region identification is provided, including: a first binarization module, configured to binarize a word region to obtain a binarized word region, wherein the word region comprises several words belonging to a same row; a first calculation module, configured to calculate, in a vertical direction, a histogram for the binarized word region, wherein the histogram includes abscissas of pixels in each column and an accumulated value of foreground color pixels of the pixels in each column; and a region identification module, configured to identify a character region of each of the words in the word region, according to distribution information of accumulated values in the histogram.

Additionally, the region identification module may include: a coordinate determination sub-module, configured to determine several sets of abscissas according to the distribution information of accumulated values in the histogram, wherein each of the several sets of abscissas includes a first abscissa and a second abscissa located on the right side of the first abscissa; wherein accumulated values respectively corresponding to the first abscissa and an abscissa on the right side of and adjacent to the first abscissa are larger than a first threshold, and an accumulated value corresponding to an abscissa on the left side of and adjacent to the first abscissa is smaller than a second threshold; and accumulated values respectively corresponding to the second abscissa and an abscissa on the left side of and adjacent to the second abscissa are larger than the first threshold, and an accumulated value corresponding to an abscissa on the right side of and adjacent to the second abscissa is smaller than the second threshold; and a region identification sub-module, configured to, for each of the several sets of abscissas, identify a pixel column where the first abscissa is located as a left edge of a character region, and identify a pixel column where the second abscissa is located as a right edge of the character region.

Additionally, the coordinate determination sub-module may include: a coordinate identification sub-module, configured to identify a third abscissa in the histogram according to the distribution information of accumulated values, wherein the third abscissa is an abscissa in the histogram corresponding to a left edge of a character region of the first valid word among the several words, or an abscissa in the histogram corresponding to a right edge of a character region of the last valid word among the several words; and a coordinate search sub-module, configured to search, starting with the third abscissa, in a predetermined direction and based on the distribution information of accumulated values, the several sets of abscissas.

Alternatively, in case that the third abscissa is the abscissa in the histogram corresponding to the left edge of the character region of the first valid word among the several words, the coordinate search sub-module is further configured to: for an i^{th} set of abscissas, search, starting with the first abscissa within the i^{th} set of abscissas in the histogram, and in a direction towards right, a fourth abscissa, wherein accumulated values respectively corresponding to the fourth abscissa and an abscissa on the left side of and adjacent to the fourth abscissa are larger than the first threshold, and an accumulated value corresponding to an abscissa on the right side of and adjacent to fourth abscissa is smaller than the second threshold; wherein 1 ≤ i ≤ n, i is a positive integer of which an initial value is 1, and n is a number of valid words in the several words; and the first abscissa in the first set of abscissas is the third abscissa; determine the fourth abscissa as the second abscissa within the i^{th} set of abscissas; search, starting with the fourth abscissa in the histogram, and in the direction towards right, a fifth abscissa, if i<n, wherein accumulated values respectively corresponding to the fifth abscissa and an abscissa on the right side of and adjacent to fifth abscissa are larger than the first threshold, and an accumulated value corresponding to an abscissa on the left side of and adjacent to the fifth abscissa is smaller than the second threshold; and set i to i+1, and determine the fifth abscissa as the first abscissa within the i^{th} set of abscissas.

Alternatively, in case that the third abscissa is the abscissa in the histogram corresponding to a right edge of the character region of the last valid word among the several words, the coordinate search sub-module is further configured to: for a j^{th} set of abscissas, search starting with the second abscissa within the j^{th} set of abscissas in the histogram, and in a direction towards left, a sixth abscissa, wherein accumulated values respectively corresponding to the sixth abscissa and an abscissa on the right side of and adjacent to sixth abscissa are larger than the first threshold, and an accumulated value corresponding to an abscissa on the left side of and adjacent to the sixth abscissa is smaller than the second threshold; 1 ≤ j ≤ n, j is a positive integer of which an initial value is n, and n is a number of valid words in the several words; and the second abscissa within the n^{th} set of abscissas is the third abscissa; determine the sixth abscissa as the first abscissa within the j^{th} set of abscissas; search, starting with the sixth abscissa in the histogram, and in the direction towards left, a seventh abscissa, if j>0, wherein accumulated values respectively corresponding to the seventh abscissa and an abscissa on the left side of and adjacent to the seventh abscissa are larger than the first threshold, and an accumulated value corresponding to an abscissa on the right side of and adjacent to seventh abscissa is smaller than the second threshold; and set j to j-1, and determine the seventh abscissa as the second abscissa within the j^{th} set of abscissas.

Alternatively, in case that the third abscissa is the abscissa in the histogram corresponding to the left edge of the character region of the first valid word among the several words, the coordinate identification sub-module is further configured to: in case that the several words include both valid words and invalid words and a first distance between a valid word and an invalid word is larger than a second distance between two adjacent valid words, look up, starting with a predetermined abscissa in the histogram and in the direction towards left, an interval which is the first interval of which a width is larger than the second distance; and determine, an abscissa located on the right side of the interval and of which an accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or in case that the several words are all valid words, determine a first one of abscissas on the left side of the histogram, of which the accumulated value of foreground color pixels is larger than the first threshold, as the third abscissas.

Alternatively, in case that the third abscissa is the abscissa in the histogram corresponding to a right edge of the character region of the last valid word among the several words, the coordinate identification sub-module is further configured to: in case that the several words include both valid words and invalid words and a first distance between a valid word and an invalid word is larger than a second distance between two adjacent valid words, look up, starting with a predetermined abscissa in the histogram and in the direction towards right, an interval of which a width is larger than the second distance; and determine, an abscissa located on the left side of the interval and of which an accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or in case that the several words are all valid words, determine a first one of abscissas located on the right side of the histogram, of which the accumulated value of foreground color pixels is larger than the first threshold, as the third abscissas.

Additionally, the device may further include: a second binarization module, configured to binarize a targeted image region, to obtain a binarized targeted image region; a second calculation module, configured to calculate, in a horizontal direction, a horizontal histogram for a binarized targeted image region, wherein the horizontal histogram includes: ordinates of pixels in each row and an accumulated value of foreground color pixels of the pixels in each row; and an edge determination module, configured to determine, according to distribution information of accumulated values in the horizontal histogram, several sets of ordinates, wherein each of the several sets of ordinates includes a first ordinate and a second ordinate located below the first ordinate; and for each of the several sets of ordinates, identify a pixel row where the first ordinate is located as an upper edge of a row of words, and identify a pixel row where the second ordinate is located as a lower edge of the row of words; accumulated values respectively corresponding to the first ordinate and an ordinate on the lower side of and adjacent to the first abscissa are larger than the first threshold, and an accumulated value corresponding to an ordinate on the upper side of and adjacent to the first ordinate is smaller than a second threshold; and accumulated values respectively corresponding to the second ordinate and an ordinate on the upper side of and adjacent to the second abscissa are larger than the first threshold, and an accumulated value corresponding to an ordinate on the lower side of and adjacent to the second abscissa is smaller than the second threshold; and the first binarization module is further configured to, for a k^{th} row in the word region, perform the step of binarizing the word region, wherein m ≥ k ≥ 1, k is a positive integer, and m is a total number of the identified rows.

According to a third aspect of embodiments of the present disclosure, a device for region identification is provided, including: a processor; and a memory for storing instructions executable by the processor; wherein the processor is configured to: binarize a word region, to obtain a binarized word region, wherein the word region includes several words belonging to a same row; calculate a histogram in a vertical direction for the binarized word region, wherein the histogram includes abscissas of pixels in each column and an accumulated value of foreground color pixels of the pixels in each column; and identify a character region of each of the words in the word region, according to distribution information of accumulated values in the histogram.

Technical solutions of embodiments of the disclosure may provide at least some of the following beneficial effects.

Embodiments of the disclosure may solve the fact that, in related arts, the accuracy of character region location is relatively low, by calculating the histogram in the vertical direction for the binarized word region and identifying the character region of each of the words in the word region according to the distribution information in the histogram; as a result, an effect that the character region of each of the words may be accurately located according to the distribution information of accumulated values of the foreground color pixels in the histogram may be obtained.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a word region according to some exemplary embodiments;
Fig. 2 is a flow chart illustrating a method for region identification according to an exemplary embodiment;
Fig. 3A is a flow chart illustrating a method for region identification according to another exemplary embodiment;
Fig. 3B is a schematic diagram illustrating a binarized word region according to another exemplary embodiment;
Fig. 3C is a schematic diagram illustrating a histogram calculated in a vertical direction according to another exemplary embodiment;
Fig. 3D is a flow chart illustrating a determining method for a terminal to determine several sets of abscissas according to another exemplary embodiment;
Fig. 3E is a schematic diagram illustrating a third abscissa identified by a terminal in the histogram according to another exemplary embodiment;
Fig. 3F is a schematic diagram illustrating each set of abscissas determined based on the histogram according to another exemplary embodiment;
Fig. 3G is a schematic diagram illustrating predetermined abscissas in the histogram according to another exemplary embodiment;
Fig. 3H is a schematic diagram illustrating a third abscissa determined based on the histogram according to another exemplary embodiment;
Fig. 4 is a flow chart illustrating an identifying method for identifying each set of abscissas based on distribution information about an accumulated value and the third abscissa according to another exemplary embodiment;
Fig. 5 is a flow chart illustrating another identifying method for identifying each set of abscissas based on the distribution information about the accumulated value and the third abscissa according to another exemplary embodiment;
Fig. 6 is a flow chart illustrating an identifying method for a terminal to identify a word region according to an exemplary embodiment;
Fig. 7 is a block diagram illustrating a device for region identification according to an exemplary embodiment;
Fig. 8 is a block diagram illustrating a device for region identification according to another exemplary embodiment; and
Fig. 9 is a block diagram illustrating a device for region identification according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

In order to facilitate understanding, a brief introduction to terms related in each exemplary embodiment of the disclosure would be made firstly.

A word region may include several words belonging to a same row. The word region may be a region in a credential image, or a region in a scanned image of article, or a region in an electronic document; and the embodiment is not limited thereto. Additionally, in the embodiment, a top edge of the word region is between a top edge of words in the same row and a bottom edge of words in a previous row; and a bottom edge of the word region is between a bottom edge of words in the same row and a top edge of words in a next row.

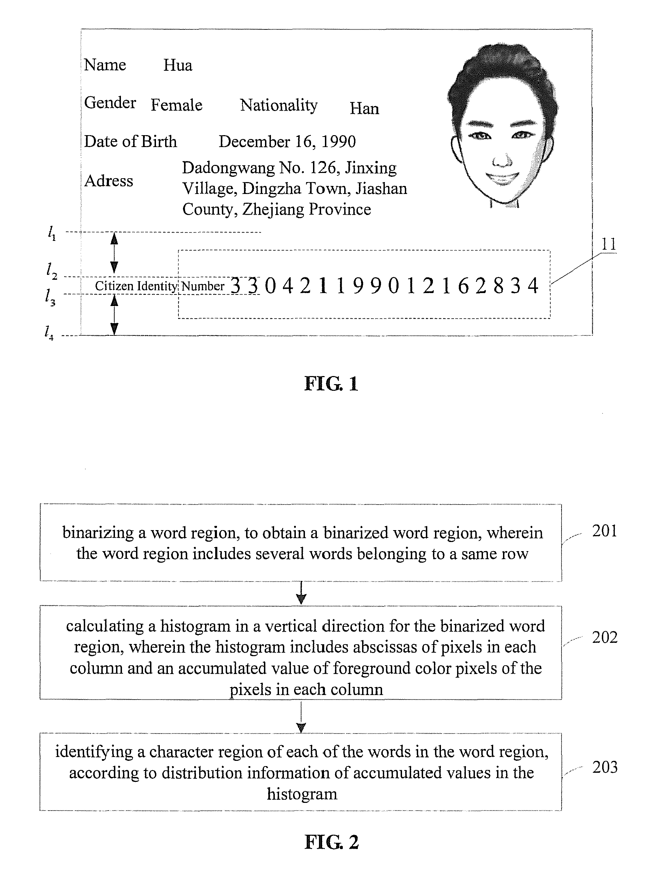

For example, taking that the word region is a region containing a citizen identity card number included in a same row on a second-generation identity card as an example, referring to Fig. 1, the top edge of the word region is between /₁ and /₂; and the bottom edge of the word region is between /₃ and /₄. For example, the word region is region 11 as shown in Fig.1.

Words in the word region may be all valid words, or may be a combination of valid words and invalid words. A character region for each of the valid words needs to be identified; however a character region for each of the invalid words needs not to be identified. For example, taking that a region for each numeral in the citizen identity card number needs to be identified (i.e., all numerals in the citizen identity card number are valid words) for an example, words in the word region may only include numerals included therein, i.e., "3 3 0 4 2 1 1 9 9 0 1 2 1 6 2 8 3 4", or may include at least one character located on the left of the numerals, in addition to the numerals ("3 3 0 4 2 1 1 9 9 0 1 2 1 6 2 8 3 4"), for example words in the word region are "number 3 3 0 4 2 1 1 9 9 0 1 2 1 6 2 8 3 4". The character region refers to a region corresponding to a single word.

Further, words referred to in various embodiments of the disclosure may be numerals, letters, characters, pictures, or other contents for which a number of foreground color pixels is larger than a threshold in a calculated histogram.

Fig. 2 is a flow chart illustrating a method for region identification, implemented by a terminal (or device), according to an exemplary embodiment. As shown in Fig. 2, the method for region identification may include following steps.

In step 201, a word region may be binarized, to obtain a binarized word region. The word region may include several words belonging to a same row.

In step 202, a histogram may be calculated in a vertical direction for the binarized word region. The histogram may include: abscissas of pixels in each column and an accumulated value of foreground color pixels of the pixels in each column.

In step 203, a character region of each of the words in the word region may be identified, according to distribution information of accumulated values in the histogram.

As can be seen, the method for region identification provided in embodiments of the disclosure solves the fact that, in related arts, the accuracy of character region location is relatively low, by calculating the histogram in the vertical direction for the binarized word region and identifying the character region of each of the words in the word region according to the distribution information in the histogram; as a result, an effect that the character region of each of the words may be accurately located according to the distribution information of accumulated values of the foreground color pixels in the histogram may be obtained.

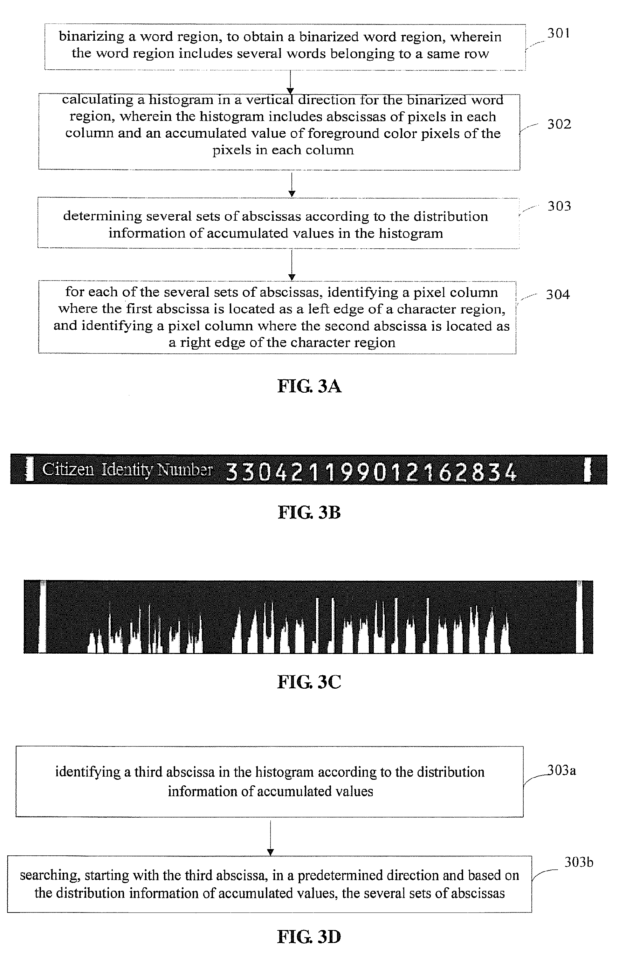

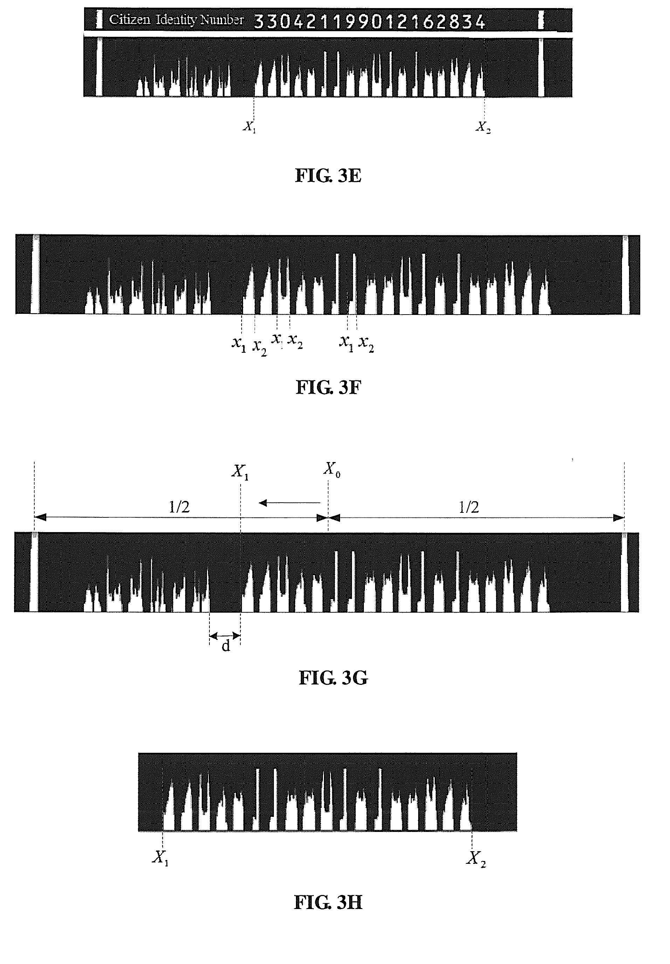

Fig. 3A is a flow chart illustrating a method for region identification, implemented by a device, according to another exemplary embodiment. As shown in Fig. 3, the method for region identification may include following steps.

In step 301, a word region may be binarized, to obtain a binarized word region. The word region may include several words belonging to a same row.

Alternatively, a terminal may preprocess the word region, in which preprocesses may include: operations such as denoising, filtering, abstraction a edge and the like; the preprocessed word region may be binarized.

Binarization means to compare grey level values of pixels in the word region with a predetermined grey level value; divide the pixels in the word region into two portions: a group of pixels for each of which the grey level value is larger than the predetermined grey level value and a group of pixels for each of which the grey level value is smaller than the predetermined grey level value; and rending the two groups of pixels in the word region with two different colors, such as black and white, to obtain the binarized word region, as shown in Fig. 3B. In Fig. 3B, pixels located in a foreground color may be called foreground color pixels, i.e., white pixels in Fig. 3B; and pixels located in a background color may be called background color pixels, i.e., black pixels in Fig. 3B.

In step 302, a histogram may be calculated in a vertical direction for the binarized word region. The histogram may include: abscissas of pixels in each column and an accumulated value of foreground color pixels of the pixels in each column.

The histogram may be calculated in the vertical direction after the binarization of the word region. The horizontal direction of the histogram may represent the abscissas of pixels in each column, and the vertical direction of the histogram may represent an accumulated value of a number of the foreground color pixels of the pixels in each column; wherein the foreground color pixels refer to pixels in a white region of the binarized word region, with respect to background color pixels. For example, the terminal may calculate the histogram.

In step 303, several sets of abscissas may be determined according to the distribution information of accumulated values in the histogram.

Alternatively, referring to Fig. 3D, step 303 may include following steps.

In step 303a, a third abscissa may be identified in the histogram according to the distribution information of accumulated values.

The third abscissa may be an abscissa in the histogram corresponding to a left edge of a character region of the first valid word among the several words, or an abscissa in the histogram corresponding to a right edge of a character region of the last valid word among the several words.

For example, taking that the valid words in the word region may be the citizen identity card number in Fig. 1 for an example, referring to Fig. 3E, the third abscissa may be the abscissa *X*₁ in the histogram corresponding to a left edge of the first valid word "3", or the abscissa *X*₂ corresponding to a right edge of the last valid word "4".

In step 303b, started with the third abscissa, the several sets of abscissas are searched in a predetermined direction and based on the distribution information of accumulated values.

After identifying the third abscissa, the terminal may search, starting with the third abscissa, the several sets of abscissas in the predetermined direction and based on the distribution information of accumulated values. In case that the third abscissa is the abscissa in the histogram corresponding to the left edge of the character region of the first valid word, the predetermined direction is a direction towards right; and in case that the third abscissa is the abscissa in the histogram corresponding to a right edge of the character region of the last valid word, the predetermined direction is a direction towards left.

A number of sets of the abscissas may correspond to the number of valid words in the word region, i.e., each set of abscissas may include a first abscissa in the histogram corresponding to a left edge of a character region of one valid word and a second abscissa in the histogram corresponding to the left edge of the character region of the valid word. That is to say, each set of abscissas may include the first abscissa and a second abscissa located on the right side of the first abscissa. Accumulated values respectively corresponding to the first abscissa and an abscissa on the right side of and adjacent to first abscissa may be larger than a first threshold, and an accumulated value corresponding to an abscissa on the left side of and adjacent to the first abscissa may be smaller than a second threshold; and accumulated values respectively corresponding to the second abscissa and an abscissa on the left side of and adjacent to the second abscissa may be larger than the first threshold, and an accumulated value corresponding to an abscissa on the right side of and adjacent to second abscissa may be smaller than the second threshold.

For example, taking that the first abscissa is *x*₁ and the second abscissa is *x*₂ as an example, the terminal may identify each of the sets of abscissas as shown in Fig. 3F. It should be noted that Fig. 3F is only an exemplary illustration showing several of the identified sets of abscissas, and in practice more sets of abscissas may be included; and the embodiment is not limited thereto.

The above first threshold and second threshold may have relatively small numerical values. For example, the first threshold and second threshold may have numerical values slightly more than 0. Alternatively, the first threshold may be 0 and the second threshold may have a numerical value approximate to 0. Further, in practice, the accumulated values respectively corresponding to the first abscissa and the abscissa on the right side of and adjacent to first abscissa may not equal to 0, and the accumulated value corresponding to the abscissa on the left side of and adjacent to the first abscissa may equal to 0; and the accumulated values respectively corresponding to the second abscissa and the abscissa on the left side of and adjacent to the second abscissa may not equal to 0, and the accumulated value corresponding to the abscissa on the right side of and adjacent to second abscissa may equal to 0.

In step 304, for each set of abscissas, a pixel column where the first abscissa is located may be identified as a left edge of a character region, and a pixel column where the second abscissa is located may be identified as a right edge of the character region.

As can be seen, the method for region identification provided in embodiments of the disclosure solves the fact that, in related arts, the accuracy of character region location is relatively low, by calculating the histogram in the vertical direction for the binarized word region and identifying the character region of each of the words in the word region according to the distribution information in the histogram; as a result, an effect that the character region of each of the words may be accurately located according to the distribution information of accumulated values of the foreground color pixels in the histogram may be obtained.

In the embodiment shown in Fig. 3A, in case that the words within the word region includes both valid words and invalid words and a first distance between a valid word and an invalid word is larger than a second distance between two adjacent valid words, step 303a may include following steps.

Starting with a predetermined abscissa in the histogram, the terminal may look up, in a direction towards left, an interval which is the first interval of which a width is larger than the second distance; and the terminal may determine an abscissa located on the right of the interval and of which the accumulated value of foreground color pixels is larger than the first threshold as the third abscissa.

The predetermined abscissa may be an abscissa among a predetermined range, which is a mapping range in the histogram corresponding to the valid words in the word region. For example, taking that the valid words are the citizen identity card number, in connection with Fig. 3E, the predetermined range is the range [*X*₁*, X*₂] in Fig. 3E. Generally, the predetermined range may be set according to an empirical value. Further, an accumulated value of foreground color pixels in the interval may be smaller than a second threshold.

Taking that the valid words are the citizen identity card number in Fig. 1 as an example, the predetermined abscissa may be an abscissa in the histogram corresponding to a middle location in a horizontal direction of the second-generation identity card, since the middle location in a horizontal direction of the second-generation identity card may certainly be among the citizen identity card number. For example, taking that a width of the word region is an overall width of the second-generation identity card as an example, referring to Fig. 3G, the predetermined abscissa may be *X*₀ as shown in Fig. 3G. The terminal may look up, starting with *X*₀ and in the direction towards left. Since the first distance between two adjacent numerals is much smaller than the second distance between the Chinese character " 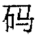 " and the first numeral in the citizen identity card number, after looking up an interval larger than the second distance (i.e., interval d as shown in Fig. 3G), the terminal may determine an abscissa located on the right of the interval and of which the accumulated value of foreground color pixels is larger than the first threshold as the third abscissa, i.e., the third abscissa *X*₁ is determined.

The above has taken that the terminal may look up, starting with the predetermined abscissa and in the direction towards left as an example. Similarly, the terminal may look up, starting with the predetermined abscissa and in the direction towards right, and after looking up an interval larger than the second distance, determine an abscissa located on the left side of the interval and of which the accumulated value of foreground color pixels is larger than the first threshold as the third abscissa. This case would not be detailed in the embodiment.

In an alternative embodiment as shown in Fig. 3A, in case that all words in the word region are valid words, step 303a may include following steps.

In case that all words in the word region are valid words, after calculating the histogram for the binarized word region, wherein a first one of abscissas on the left side of the histogram, of which the accumulated value of foreground color pixels is larger than the first threshold, may be determined as an abscissas in the histogram corresponding to the first valid word, the terminal then may determine a first one of abscissas on the left side of the histogram, of which the accumulated value of foreground color pixels is larger than the first threshold, as the third abscissa.

For example, referring to Fig. 3H, the terminal may determine *X*₁ as the third abscissa.

Similarly, a first one of abscissas on the right side of the histogram of which the accumulated value of foreground color pixels is larger than the first threshold may be determined as an abscissas in the histogram corresponding to the last valid word. Therefore, the terminal then may determine the first one of the abscissas on the right side of the histogram of which the accumulated value of foreground color pixels is larger than the first threshold as the third abscissa. Still referring to Fig. 3H, the terminal may determine *X*₂ as the third abscissa.

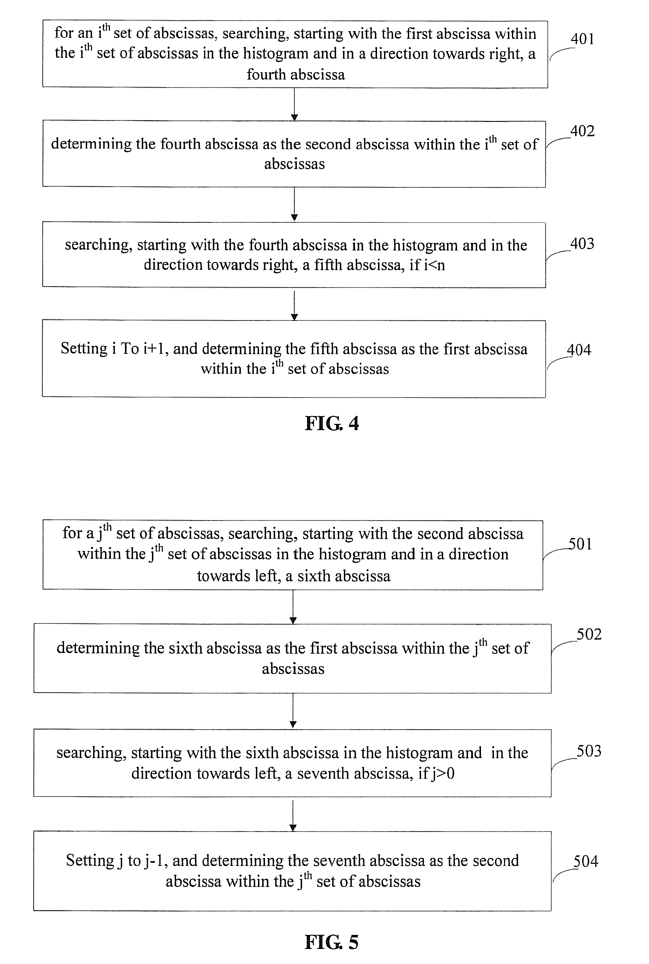

In the embodiment shown in Fig. 3A, after the terminal calculated the third abscissa by the above calculation mode, in case that the calculated third abscissa is an abscissa in the histogram corresponding to the left edge of the character region of the first valid words among several words, a reference may be made to Fig. 4. In Fig. 4, step 303b may be replaced with steps 401-404.

In step 401, for an i^{th} set of abscissas, started with the first abscissa within the i^{th} set of abscissas in the histogram, a fourth abscissa may be searched in a direction towards right.

1 ≤ i ≤ n, i is a positive integer whose initial value is 1, and n is a number of valid words in several words. For example, taking that the valid words may be a citizen identity card number in a second-generation identity card as an example, the number of valid words is 18.

Additionally, the first abscissa in the first set of abscissas may be the third abscissa. And accumulated values respectively corresponding to the fourth abscissa and an abscissa on the left side of and adjacent to the fourth abscissa may be larger than a first threshold, and an accumulated value corresponding to an abscissa on the right side of and adjacent to fourth abscissa may be smaller than a second threshold.

Taking that i=1 as an example, since the first abscissa *x*₁ in the first set of abscissas may be the third abscissa *X*₁ the terminal mat search, starting with *X*₁ in the histogram and in a direction towards left, to determine a first fourth abscissa.

In step 402, the fourth abscissa may be determined as the second abscissa within the i^{th} set of abscissas.

In step 403, if i<n, started with the fourth abscissa in the histogram, a fifth abscissa may be searched in the direction towards right.

If i<n, the terminal may determine that there may be at least one valid word in the right side for which a character region has not been identified. At the point, the terminal may search, starting with an abscissa in the histogram corresponding to the right edge of the currently determined character region of a valid word and in the direction towards right, an abscissa in the histogram corresponding to a left edge of a character region of a next valid word.

Alternatively, the terminal may search, start with the fourth abscissa in the histogram and in the direction towards right, a first fifth abscissa. Accumulated values respectively corresponding to the fifth abscissa and an abscissa on the right side of and adjacent to fifth abscissa may be larger than a first threshold, and an accumulated value corresponding to an abscissa on the left side of and adjacent to the fifth abscissa may be smaller than a second threshold.

In step 404, set i=i+1, the fifth abscissa may be determined as the first abscissa within the i^{th} set of abscissas.

The terminal may determine the searched abscissa as the abscissa in the histogram corresponding to the left edge of the character region of the next valid word. Alternatively, the terminal may set i=i+1, and determine the fifth abscissa as the first abscissa within the i^{th} set of abscissas.

From hereafter, the terminal may continue to search in the direction towards right, to determine a set of abscissas corresponding to the character region of each of the valid words according to the above method.

In the embodiment shown in Fig. 3A, after the terminal calculated the third abscissa by the above calculation mode, in case that the calculated third abscissa is an abscissa in the histogram corresponding to a right edge of the character region of the last valid words among several words, a reference may be made to Fig. 5. In Fig. 5, step 303b may be replaced with steps 501-504.

In step 501, for a j^{th} set of abscissas, started with the second abscissa within the j^{th} set of abscissas in the histogram, a sixth abscissa may be searched in a direction towards left.

Accumulated values respectively corresponding to the sixth abscissa and an abscissa on the right side of and adjacent to sixth abscissa may be larger than a first threshold, and an accumulated value corresponding to an abscissa on the left side of and adjacent to the sixth abscissa may be smaller than a second threshold; wherein 1 ≤ j ≤ n, j is a positive integer whose initial value is n, and n is a number of valid words in several words; and the second abscissa within the n^{th} set of abscissas may be the third abscissa.

In step 502, the sixth abscissa may be determined as the first abscissa within the j^{th} set of abscissas.

In step 503, if j>0, started with the sixth abscissa in the histogram, a seventh abscissa may be searched in the direction towards left. Accumulated values respectively corresponding to the seventh abscissa and an abscissa on the left side of and adjacent to the seventh abscissa may be larger than a first threshold, and an accumulated value corresponding to an abscissa on the left side of and adjacent to the seventh abscissa may be smaller than a second threshold; wherein 1 ≤ j ≤ n, j is a positive integer whose initial value is n.

In step 504, set j to j-1, the seventh abscissa may be determined as the second abscissa within the j^{th} set of abscissas.

It should be further explained that steps 501-504 may be similar to steps 401-404; a different between them may be that the method provided in steps 401-404 includes a search starting at the left side and going towards right, while the method provided in steps 501-504 includes a search starting at the right side and going towards left. The embodiment would not be detailed herein.

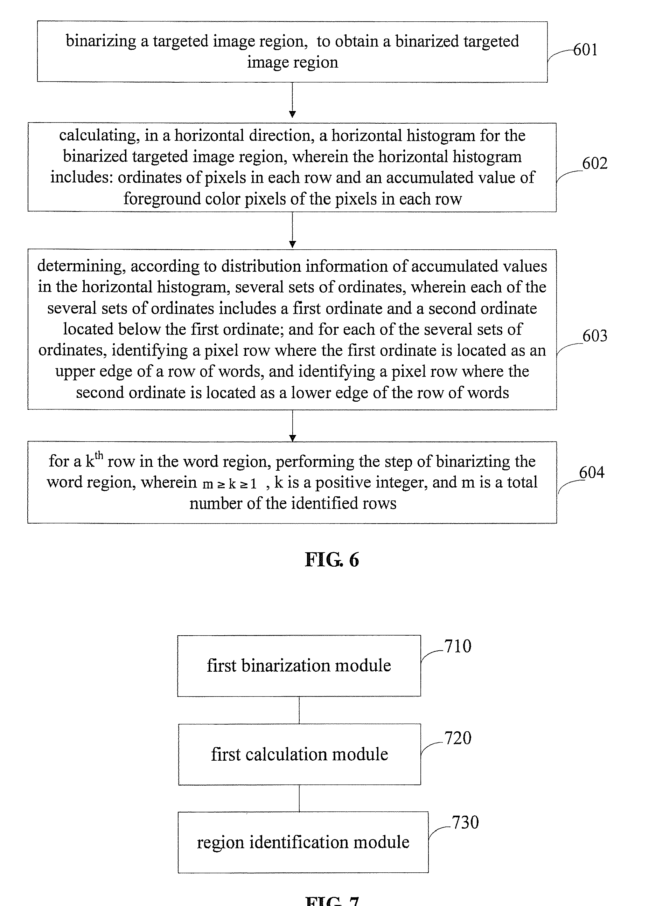

Based on the above-provided embodiment, referring to Fig. 6, before binarizing the word region to obtain the binarized word region, the terminal may further perform following steps.

In step 601, a targeted image region may be binarized, such that a binarized targeted image region may be obtained.

The targeted image region may be a region including several rows of words.

Step 601 may be similar to step 301 in the above embodiment, and thus detailed technical specification may refer to the above embodiment, which would not be limited in the present embodiment.

In step 602, a horizontal histogram may be calculated in a horizontal direction for a binarized targeted image region. The horizontal histogram may include: ordinates of pixels in each row and an accumulated value of foreground color pixels of the pixels in each row.

Step 602 may be similar to step 302 in the above embodiment; a difference between them may be that in step 302 the histogram may be calculated in the vertical direction for the binarized word region, while in step 602 the histogram may be calculated in the horizontal direction for a binarized targeted image region.

In step 603, several sets of ordinates may be determined according to distribution information of accumulated values in the horizontal histogram; wherein each set of ordinates may include a first ordinate and a second ordinate located below the first ordinate. For each set of ordinates, a pixel row where the first ordinate may be located may be determined as the upper edge of a row of words, and a pixel row where the second ordinate may be located may be determined as the lower edge of the row of words.

After calculating the horizontal histogram, the terminal may determine the several sets of ordinates according to the distribution information of accumulated values in the histogram; and then determine a region for each row according to each of the several sets of ordinates.

The step may be similar to the step of determining several sets of abscissas according to the distribution information of accumulated values in the vertical histogram, and then determining the left edge and the right edge of each word according to each of the several sets of abscissas. Detailed technical specification may refer to the above embodiment.

Accumulated values respectively corresponding to the first ordinate and an ordinate on the lower side of and adjacent to the first abscissa may be larger than a first threshold, and an accumulated value corresponding to an ordinate on the upper side of and adjacent to the first ordinate may be smaller than a second threshold; and accumulated values respectively corresponding to the second ordinate and an ordinate on the upper side of and adjacent to the second abscissa may be larger than the first threshold, and an accumulated value corresponding to an ordinate on the lower side of and adjacent to the second abscissa may be smaller than the second threshold.

In step 604, the step of binarizing the word region to obtain the binarized word region may be performed for the k^{th} row in the word region, wherein m ≥ k ≥ 1, k is a positive integer, and m is a total number of the identified rows.

After identified all rows of words in step 603, the terminal may perform the step of binarizing the word region to obtain the binarized word region for each of the rows of words.

As such, the terminal may identify the character region of each valid word in each row in the targeted image region.

The above embodiment has taken that the terminal may determine the word region according to the horizontal histogram as an example. Alternatively, the terminal may determine the word region by other ways for determination. For example, the terminal may obtain the word region by an image positioning technology. Taking that the word region may be a citizen identity card number in a second-generation identity card as an example, since the citizen identity card number may be located at a relatively fixed position and relatively far from an address and head portrait above the citizen identity card number, the terminal may directly locate at the bottom 1/5 region of the credential image and determine the located image region as the word region. The embodiment would not be limited thereto.

Device embodiments are shown below, which may be configured to perform method embodiments of the disclosure. Details which are not disclosed in the device embodiments may refer to the method embodiments of the disclosure.

Fig. 7 is a block diagram illustrating a device for region identification according to an exemplary embodiment. As shown in Fig. 7, the device for region identification may include but not limited to: a first binarization module 710, a first calculation module 720 and a region identification module 730.

The first binarization module 710 may be configured to binarize a word region, to obtain a binarized word region. The word region may include several words belonging to a same row.

The first calculation module 720 may be configured to calculate a histogram in a vertical direction for the binarized word region. The histogram may include: abscissas of pixels in each column and an accumulated value of foreground color pixels of the pixels in each column.

The region identification module 730 may be configured to identify a character region of each of the words in the word region, according to distribution information of accumulated values in the histogram.

As can be seen, the device for region identification provided in embodiments of the disclosure solves the fact that, in related arts, the accuracy of character region location is relatively low, by calculating the histogram in the vertical direction for the binarized word region and identifying the character region of each of the words in the word region according to the distribution information in the histogram; as a result, an effect that the character region of each of the words may be accurately located according to the distribution information of accumulated values of the foreground color pixels in the histogram may be obtained.

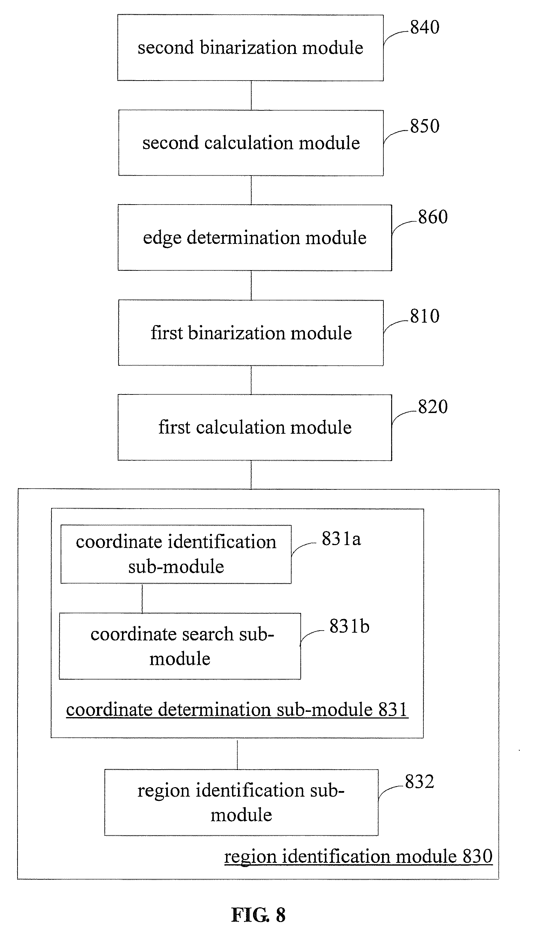

Fig. 8 is a block diagram illustrating a device (or terminal) for region identification according to another exemplary embodiment. As shown in Fig. 8, the device for region identification may include but not limited to: a first binarization module 810, a first calculation module 820 and a region identification module 830.

The first binarization module 810 may be configured to binarize a word region, to obtain a binarized word region. The word region may include several words belonging to a same row.

Alternatively, the first binarization module 810 may preprocess the word region, in which preprocesses may include: operations such as denoising, filtering, abstraction a edge and the like; and binarize the preprocessed word region.

Binarization means to compare grey level values of pixels in the word region with a predetermined grey level value; divide the pixels in the word region into two portions: a group of pixels for each of which the grey level value is larger than the predetermined grey level value and a group of pixels for each of which the grey level value is smaller than the predetermined grey level value; and rending the two groups of pixels in the word region with two different colors, such as black and white, to obtain the binarized word region.

The first calculation module 820 may be configured to calculate a histogram in a vertical direction for the binarized word region. The histogram may include: abscissas of pixels in each column and an accumulated value of foreground color pixels of the pixels in each column.

After the first binarization module 810 binarized the word region, the first calculation module 820 may calculate the histogram in the vertical direction. The horizontal direction of the histogram may represent the abscissas of pixels in each column, and the vertical direction of the histogram may represent an accumulated value of a number of the foreground color pixels of the pixels in each column; wherein the foreground color pixels refer to pixels in a white region of the binarized word region, with respect to background color pixels.

The region identification module 830 may be configured to identify a character region of each of the words in the word region, according to distribution information of accumulated values in the histogram.

In a potential implement, the region identification module 830 may include a coordinate determination sub-module 831 and a region identification sub-module 832.

The coordinate determination sub-module 831 may be configured to determine several sets of abscissas, according to the distribution information of accumulated values in the histogram. Each set of abscissas may include a first abscissa and a second abscissa located on the right side of the first abscissa; wherein accumulated values respectively corresponding to the first abscissa and an abscissa on the right side of and adjacent to first abscissa may be larger than a first threshold, and an accumulated value corresponding to an abscissa on the left side of and adjacent to the first abscissa may be smaller than a second threshold; and accumulated values respectively corresponding to the second abscissa and an abscissa on the left side of and adjacent to the second abscissa may be larger than the first threshold, and an accumulated value corresponding to an abscissa on the right side of and adjacent to second abscissa may be smaller than the second threshold.

The region identification sub-module 832 may be configured to, for each set of abscissas, determine a pixel column where the first abscissa is located as a left edge of a character region and a pixel column where the second abscissa is located may be identified as a right edge of the character region.

Additionally, the coordinate determination sub-module 831 may include a coordinate identification sub-module 831a and a coordinate search sub-module 831b.

The coordinate identification sub-module 831a may be configured to identify a third abscissa in the histogram according to the distribution information of accumulated values. The third abscissa may be an abscissa in the histogram corresponding to a left edge of a character region of the first valid word among several words, or an abscissa in the histogram corresponding to a right edge of a character region of the last valid word among the several words.

The coordinate search sub-module 831b may be configured to search, starting with the third abscissa, in a predetermined direction and based on the distribution information of accumulated values, several sets of abscissas.

After the coordinate identification sub-module 831a identified the third abscissa, the coordinate search sub-module 831b may search, starting with the third abscissa, in the predetermined direction and based on the distribution information of accumulated values, the several sets of abscissas. In case that the third abscissa is the abscissa in the histogram corresponding to the left edge of the character region of the first valid word, the predetermined direction is a direction towards right; and in case that the third abscissa is the abscissa in the histogram corresponding to a right edge of the character region of the last valid word, the predetermined direction is a direction towards left.

A number of sets of the abscissas may correspond to the number of valid words in the word region, i.e., each set of abscissas may include a first abscissa in the histogram corresponding to a left edge of a character region of one valid word and a second abscissa in the histogram corresponding to the left edge of the character region of the valid word. That is to say, each set of abscissas may include the first abscissa and a second abscissa located on the right side of the first abscissa. Accumulated values respectively corresponding to the first abscissa and an abscissa on the right side of and adjacent to first abscissa may be larger than a first threshold, and an accumulated value corresponding to an abscissa on the left side of and adjacent to the first abscissa may be smaller than a second threshold; and accumulated values respectively corresponding to the second abscissa and an abscissa on the left side of and adjacent to the second abscissa may be larger than the first threshold, and an accumulated value corresponding to an abscissa on the right side of and adjacent to second abscissa may be smaller than the second threshold.

The above first threshold and second threshold may have relatively small numerical values. For example, the first threshold and second threshold may have numerical values slightly more than 0. Alternatively, the first threshold may be 0 and the second threshold may have a numerical value approximate to 0. Further, in practice, the accumulated values respectively corresponding to the first abscissa and the abscissa on the right side of and adjacent to first abscissa may not equal to 0, and the accumulated value corresponding to the abscissa on the left side of and adjacent to the first abscissa may equal to 0; and the accumulated values respectively corresponding to the second abscissa and the abscissa on the left side of and adjacent to the second abscissa may not equal to 0, and the accumulated value corresponding to the abscissa on the right side of and adjacent to second abscissa may equal to 0.

Alternatively, the third abscissa may be an abscissa in the histogram corresponding to the left edge of the character region of the first word of several words.

The coordinate search sub-module 831b may be further configured to, for an i^{th} set of abscissas, search, starting with the first abscissa within the i^{th} set of abscissas in the histogram and in the direction towards right, a fourth abscissa. Accumulated values respectively corresponding to the fourth abscissa and an abscissa on the left side of and adjacent to the fourth abscissa may be larger than a first threshold, and an accumulated value corresponding to an abscissa on the right side of and adjacent to fourth abscissa may be smaller than a second threshold. 1 ≤ i ≤ n, i is a positive integer whose initial value is 1, and n is a number of valid words in several words; and the first abscissa within the first set of abscissas may be the third abscissa.

The coordinate search sub-module 831b may be further configured to determine the fourth abscissa as the second abscissa within the i^{th} set of abscissas.

The coordinate search sub-module 831b may be further configured to search, start with the fourth abscissa in the histogram and in the direction towards right, a fifth abscissa, if i<n. Accumulated values respectively corresponding to the fifth abscissa and an abscissa on the right side of and adjacent to fifth abscissa may be larger than a first threshold, and an accumulated value corresponding to an abscissa on the left side of and adjacent to the fifth abscissa may be smaller than a second threshold.

The coordinate search sub-module 831b may be further configured to set i=i+1 and determine the fifth abscissa as the first abscissa within the i^{th} set of abscissas.

The coordinate search sub-module 831b may determine the searched abscissa as the abscissa in the histogram corresponding to the left edge of the character region of the next valid word. Alternatively, the coordinate search sub-module 831b may set i=i+1, and determine the fifth abscissa as the first abscissa within the i^{th} set of abscissas.

From hereafter, the coordinate search sub-module 831b may continue to search in the direction towards right, to determine a set of abscissas corresponding to the character region of each of the valid words according to the above method.

Alternatively, the third abscissa may be an abscissa in the histogram corresponding to a right edge of the character region of the last valid words among several words.

The coordinate search sub-module 831b may be further configured to perform following operations: for a j^{th} set of abscissas, searching, starting with the second abscissa within the j^{th} set of abscissas in the histogram and in the direction towards left, a sixth abscissa; accumulated values respectively corresponding to the sixth abscissa and an abscissa on the right side of and adjacent to sixth abscissa may be larger than a first threshold, and an accumulated value corresponding to an abscissa on the left side of and adjacent to the sixth abscissa may be smaller than a second threshold; wherein 1 ≤ j ≤ n , j is a positive integer whose initial value is n, and n is a number of valid words in several words; and the second abscissa within the n^{th} set of abscissas may be the third abscissa; determining the sixth abscissa as the first abscissa within the j^{th} set of abscissas.

The coordinate search sub-module 831b may be further configured to search, starting with the sixth abscissa in the histogram and in the direction towards left, a seventh abscissa, if j>0. Accumulated values respectively corresponding to the seventh abscissa and an abscissa on the left side of and adjacent to the seventh abscissa may be larger than a first threshold, and an accumulated value corresponding to an abscissa on the left side of and adjacent to the seventh abscissa may be smaller than a second threshold; wherein 1 ≤ j ≤ n, j is a positive integer whose initial value is n.

The coordinate search sub-module 831b may be further configured to set j to j-1 and determine the seventh abscissa as the second abscissa within the j^{th} set of abscissas.

Alternatively, the third abscissa may be an abscissa in the histogram corresponding to the left edge of the character region of the first valid words among several words.

It should be further explained that in case that the third abscissa is an abscissa in the histogram corresponding to a right edge of the character region of the last valid words among several words, the coordinate search sub-module 831b may perform similar steps as those performed in case that the third abscissa is an abscissa in the histogram corresponding to the left edge of the character region of the first valid words among the several words, which are omitted herein.

In case that the several words include both valid words and invalid words and a first distance between a valid word and an invalid word is larger than a second distance between two adjacent valid words, the coordinate identification sub-module 831a may be configured to look up, starting with a predetermined abscissa in the histogram and in the direction towards left, an interval which is the first interval of which a width is larger than the second distance; and determine an abscissa located on the right of the interval and of which the accumulated value of foreground color pixels is larger than the first threshold as the third abscissa; wherein the predetermined abscissa may belong to a predetermined range, which is a range set according to an empirical value; and an accumulated value of foreground color pixels in the interval may be smaller than a second threshold.

Alternatively, in case that all words in the word region are valid words, the coordinate identification sub-module 831a may be configured to determine a first one of abscissas on the left side of the histogram, of which the accumulated value of foreground color pixels is larger than the first threshold, as the third abscissas.

Alternatively, in case that the several words include both valid words and invalid words and the first distance between a valid word and an invalid word is larger than a second distance between two adjacent valid words, the coordinate identification sub-module 831a may be configured to look up, starting with a predetermined abscissa in the histogram and in the direction towards left, an interval which is the first interval of which a width is larger than the second distance; and determine an abscissa located on the right of the interval and of which the accumulated value of foreground color pixels is larger than the first threshold as the third abscissa.

The predetermined abscissa may be an abscissa belonging to predetermined range, which is a mapping range in the histogram corresponding to the valid words in the word region.

The above has taken that the coordinate identification sub-module 831a may look up, starting with the predetermined abscissa and in the direction towards left as an example. Similarly, the coordinate identification sub-module 831a may look up, starting with the predetermined abscissa and in the direction towards right, and after looking up an interval larger than the second distance, determine an abscissa located on the left side of the interval and of which the accumulated value of foreground color pixels is larger than the first threshold as the third abscissa. This case would not be illustrated in the embodiment.

Alternatively, in case that several words are all valid words, after calculating the histogram for the binarized word region, wherein a first one of abscissas on the left side of the histogram of which the accumulated value of foreground color pixels is larger than the first threshold may be determined as an abscissas in the histogram corresponding to the first valid word, the coordinate identification sub-module 831a then may determine a first one of abscissas on the left side of the histogram, of which the accumulated value of foreground color pixels is larger than the first threshold, as the third abscissa.

Alternatively, the third abscissa may be an abscissa in the histogram corresponding to a right edge of the character region of the last valid words among several words.

In case that the several words include both valid words and invalid words and a first distance between a valid word and an invalid word is larger than a second distance between two adjacent valid words, the coordinate identification sub-module 831a may be configured to look up, starting with a predetermined abscissa in the histogram and in the direction towards right, an interval of which a width is larger than the second distance; and determine an abscissa located on the left side of the interval and of which the accumulated value of foreground color pixels is larger than the first threshold as the third abscissa; wherein the predetermined abscissa may belong to a predetermined range, which is a range set according to an empirical value; and an accumulated value of foreground color pixels in the interval may be smaller than a second threshold.

Alternatively, in case that the several words are all valid words, the coordinate identification sub-module 831a may be configured to determine a first one of abscissas on the right side of the histogram, of which the accumulated value of foreground color pixels is larger than the first threshold, as the third abscissas.

It should be further explained that in case that the third abscissa is an abscissa in the histogram corresponding to a right edge of the character region of the last valid words among several words, the coordinate identification sub-module 831a may perform similar steps as those performed in case that the third abscissa is an abscissa in the histogram corresponding to the left edge of the character region of the first valid words among the several words, which are omitted herein.

Alternatively, the device may further include: a second binarization module 840, a second calculation module 850 and an edge determination module 860.

The second binarization module 840 may be configured to binarize a targeted image region, to obtain a binarized targeted image region.

The targeted image region may be a region including several rows of words.

The second binarization module 840 may be similar to the first binarization module 810, and thus detailed technical specification may refer to the first binarization module 810, which would not be limited in the present embodiment.

The second calculation module 850 may be configured to calculate a horizontal histogram in a horizontal direction for a binarized targeted image region. The horizontal histogram may include: ordinates of pixels in each row and an accumulated value of foreground color pixels of the pixels in each row.

The second calculation module 850 may be similar to the first calculation module 820; a difference between them may be that the first calculation module 820 may calculate the histogram in the vertical direction for the binarized word region, while the second calculation module 850 may calculate the histogram in the horizontal direction for a binarized targeted image region.

The edge determination module 860 may be configured to determine several sets of ordinates, according to distribution information of accumulated values in the histogram; wherein each set of ordinates may include a first ordinate and a second ordinate located below the first ordinate. For each set of ordinates, the row of pixels where the first ordinate may be located may be determined as an upper edge of a row of words, and the row of pixels where the second ordinate may be located may be determined as a lower edge of a row of words. Accumulated values respectively corresponding to the first ordinate and an ordinate on the lower side of and adjacent to the first abscissa may be larger than a first threshold, and an accumulated value corresponding to an ordinate on the upper side of and adjacent to the first ordinate may be smaller than a second threshold; and accumulated values respectively corresponding to the second ordinate and an ordinate on the upper side of and adjacent to the second abscissa may be larger than the first threshold, and an accumulated value corresponding to an ordinate on the lower side of and adjacent to the second abscissa may be smaller than the second threshold.

After calculating the horizontal histogram in the horizontal direction, the edge determination module 860 may determine the several sets of ordinates according to the distribution information of accumulated values in the histogram; and then determine a region for each row according to each of the several sets of ordinates.

The first binarization module 810 may be further configured to binarize, for the k^{th} row in the word region, the word region, to obtain the binarized word region, wherein m ≥ k ≥ 1, k is a positive integer, and m is a total number of the identified rows.

As such, the device for region identification may identify the character region of each valid word in each row in the targeted image region.

As can be seen, the device for region identification provided in embodiments of the disclosure solves the fact that, in related arts, the accuracy of character region location is relatively low, by calculating the histogram in the vertical direction for the binarized word region and identifying the character region of each of the words in the word region according to the distribution information in the histogram; as a result, an effect that the character region of each of the words may be accurately located according to the distribution information of accumulated values of the foreground color pixels in the histogram may be obtained.

Regarding the device in the above embodiments, specific fashions in which various modules perform corresponding operations have been detailed in related method embodiments, which would not be further explained herein.

A device for region identification may be provided in an exemplary embodiment of the disclosure. The device for region identification may implement the method for region identification provided in the disclosure. The device for region identification may include a processor and a memory for storing processor-executable instructions.

The processor may be configured to binarize a word region, wherein the word region includes several words belonging to a same row; calculate a histogram in a vertical direction for the binarized word region, wherein the histogram includes abscissas of pixels in each column and an accumulated value of foreground color pixels of the pixels in each column; and identify a character region of each of the words in the word region, according to distribution information of accumulated values in the histogram.

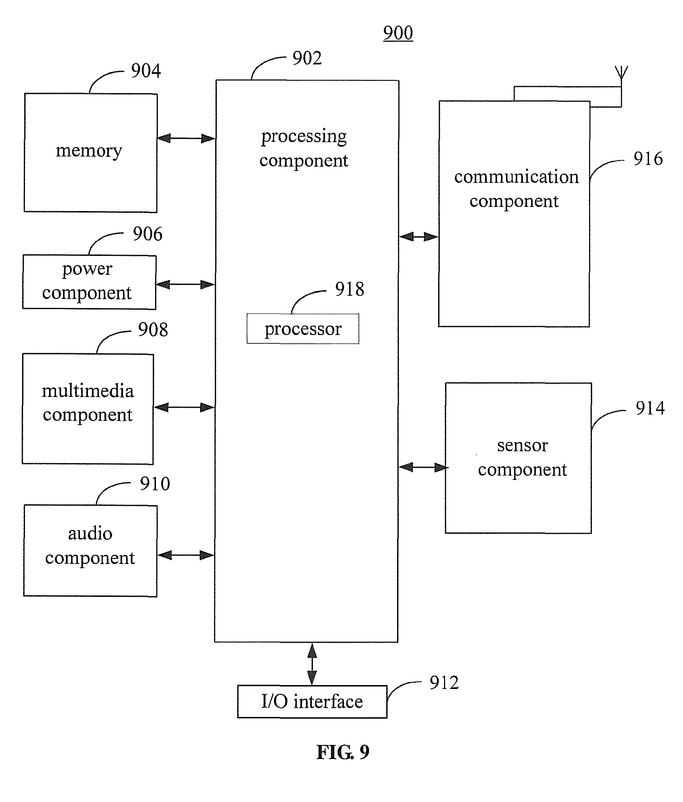

Fig. 9 is a block diagram illustrating a device for region identification according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 may typically control overall operations of the device 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 may be configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power for the device 900.

The multimedia component 908 may include a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have optical focusing and zooming capability.

The audio component 910 may be configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, the peripheral interface modules being, for example, a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components (e.g., the display and the keypad, of the device 900), a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of a nearby object without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 may be configured to facilitate communication, wired or wirelessly, between the device 900 and other devices. The device 900 can access a wireless network based on a communication standard, such as WiFi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 918 in the device 900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A method for region identification, **characterized in that** said method comprises:
binarizing (201, 301) a word region, to obtain a binarized word region, wherein the word region comprises several words belonging to a same row;
calculating (202, 302) a histogram in a vertical direction for the binarized word region, wherein the histogram comprises abscissas of pixels in each column and an accumulated value of foreground color pixels of the pixels in each column; and
identifying (203) a character region of each of the words in the word region, according to distribution information of accumulated values in the histogram.

2. The method of claim 1, wherein the identifying (203) comprises:
determining (303) several sets of abscissas according to the distribution information of the accumulated values in the histogram, wherein each of the several sets of abscissas comprises a first abscissa and a second abscissa located on the right side of the first abscissa; wherein accumulated values respectively corresponding to the first abscissa and an abscissa on the right side of and adjacent to the first abscissa are larger than a first threshold, and an accumulated value corresponding to an abscissa on the left side of and adjacent to the first abscissa is smaller than a second threshold; and accumulated values respectively corresponding to the second abscissa and an abscissa on the left side of and adjacent to the second abscissa are larger than the first threshold, and an accumulated value corresponding to an abscissa on the right side of and adjacent to the second abscissa is smaller than the second threshold; and
for each of the several sets of abscissas, identifying (304) a pixel column where the first abscissa is located as a left edge of a character region, and identifying a pixel column where the second abscissa is located as a right edge of the character region.

3. The method of claim 2, wherein the determining (303) several sets of abscissas according to the distribution information of the accumulated values in the histogram comprises:
identifying (303a) a third abscissa in the histogram according to the distribution information of the accumulated values, wherein the third abscissa is an abscissa in the histogram corresponding to a left edge of a character region of the first valid word among the several words, or an abscissa in the histogram corresponding to a right edge of a character region of the last valid word among the several words; and
searching (303b), starting with the third abscissa in a predetermined direction and based on the distribution information of the accumulated values, the several sets of abscissas.

4. The method of claim 3, wherein in case that the third abscissa is the abscissa in the histogram corresponding to the left edge of the character region of the first valid word among the several words, the searching (303b), starting with the third abscissa in the predetermined direction and based on the distribution information of the accumulated values, the several sets of abscissas comprises:
for an i^{th} set of abscissas, searching (401), starting with the first abscissa within the i^{th} set of abscissas in the histogram and in a direction towards right, a fourth abscissa, wherein accumulated values respectively corresponding to the fourth abscissa and an abscissa on the left side of and adjacent to the fourth abscissa are larger than the first threshold, and an accumulated value corresponding to an abscissa on the right side of and adjacent to the fourth abscissa is smaller than the second threshold; wherein 1 ≤ i ≤ n, i is a positive integer of which an initial value is 1, and n is a number of valid words in the several words; and the first abscissa in the first set of abscissas is the third abscissa;
determining (402) the fourth abscissa as the second abscissa within the i^{th} set of abscissas;
searching (403), starting with the fourth abscissa in the histogram and in the direction towards right, a fifth abscissa, if i<n, wherein accumulated values respectively corresponding to the fifth abscissa and an abscissa on the right side of and adjacent to the fifth abscissa are larger than the first threshold, and an accumulated value corresponding to an abscissa on the left side of and adjacent to the fifth abscissa is smaller than the second threshold; and
setting (404) i to i+1, and determining (404) the fifth abscissa as the first abscissa within the i^{th} set of abscissas.

5. The method of claim 3, wherein in case that the third abscissa is the abscissa in the histogram corresponding to a right edge of the character region of the last valid word among the several words, the searching (303b), starting with the third abscissa in the predetermined direction and based on the distribution information of accumulated values, the several sets of abscissas comprises:
for a j^{th} set of abscissas, searching (501), starting with the second abscissa within the j^{th} set of abscissas in the histogram and in a direction towards left, a sixth abscissa, wherein accumulated values respectively corresponding to the sixth abscissa and an abscissa on the right side of and adjacent to the sixth abscissa are larger than the first threshold, and an accumulated value corresponding to an abscissa on the left side of and adjacent to the sixth abscissa is smaller than the second threshold; 1 ≤ j ≤ n , j is a positive integer of which an initial value is n, and n is a number of valid words in the several words; and the second abscissa within the n^{th} set of abscissas is the third abscissa;
determining (502) the sixth abscissa as the first abscissa within the j^{th} set of abscissas;
searching (503), starting with the sixth abscissa in the histogram and in the direction towards left, a seventh abscissa, if j>0, wherein accumulated values respectively corresponding to the seventh abscissa and an abscissa on the left side of and adjacent to the seventh abscissa are larger than the first threshold, and an accumulated value corresponding to an abscissa on the right side of and adjacent to the seventh abscissa is smaller than the second threshold; and
setting (504) j to j-1, and determining (504) the seventh abscissa as the second abscissa within the j^{th} set of abscissas.

6. The method of claim 3, wherein in case that the third abscissa is the abscissa in the histogram corresponding to the left edge of the character region of the first valid word among the several words, the identifying (304) the third abscissa in the histogram according to the distribution information of the accumulated values comprises:
in case that the several words comprise both valid words and invalid words and a first distance between a valid word and an invalid word is larger than a second distance between two adjacent valid words, looking up, starting with a predetermined abscissa in the histogram and in the direction towards left, an interval which is the first interval of which a width is larger than the second distance; and determining, an abscissa located on the right side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or
in case that the several words are all valid words, determining, a first one of abscissas located on the left side of the histogram of which the accumulated value of foreground color pixels is larger than the first threshold, as the third abscissas.

7. The method of claim 3, in case that the third abscissa is the abscissa in the histogram corresponding to a right edge of the character region of the last valid word among the several words, the identifying (304) the third abscissa in the histogram according to the distribution information of the accumulated values comprises:
in case that the several words comprise both valid words and invalid words and a first distance between a valid word and an invalid word is larger than a second distance between two adjacent valid words, looking up, starting with a predetermined abscissa in the histogram and in the direction towards right, an interval of which a width is larger than the second distance; and determining, an abscissa located on the left side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or
in case that the several words are all valid words, determining, a first one of abscissas located on the right side of the histogram of which the accumulated value of foreground color pixels is larger than the first threshold, as the third abscissas.

8. The method of any one of claims 1 to 7, further comprising:
binarizing (601) a targeted image region, to obtain a binarized targeted image region;
calculating (602), in a horizontal direction, a horizontal histogram for a binarized targeted image region, wherein the horizontal histogram comprises: ordinates of pixels in each row and an accumulated value of foreground color pixels of the pixels in each row;
determining (603), according to distribution information of the accumulated values in the horizontal histogram, several sets of ordinates, wherein each of the several sets of ordinates comprises a first ordinate and a second ordinate located below the first ordinate; and for each of the several sets of ordinates, identifying a pixel row where the first ordinate is located as an upper edge of a row of words, and identifying a pixel row where the second ordinate is located as a lower edge of the row of words; accumulated values respectively corresponding to the first ordinate and an ordinate on the lower side of and adjacent to the first abscissa are larger than the first threshold, and an accumulated value corresponding to an ordinate on the upper side of and adjacent to the first ordinate is smaller than the second threshold; and accumulated values respectively corresponding to the second ordinate and an ordinate on the upper side of and adjacent to the second abscissa are larger than the first threshold, and an accumulated value corresponding to an ordinate on the lower side of and adjacent to the second abscissa is smaller than the second threshold; and
for a k^{th} row in the word region, performing (604) the binarizing the word region, wherein m ≥ k ≥ 1, k is a positive integer, and m is a total number of the identified rows.

9. A device for region identification, **characterized in that** said device comprises:
a first binarization module (710, 810), configured to binarize a word region to obtain a binarized word region, wherein the word region comprises several words belonging to a same row;
a first calculation module (720, 820), configured to calculate, in a vertical direction, a histogram for the binarized word region, wherein the histogram comprises abscissas of pixels in each column and an accumulated value of foreground color pixels of the pixels in each column; and
a region identification module (730, 830), configured to identify a character region of each of the words in the word region, according to distribution information of accumulated values in the histogram.

10. The device of claim 9, wherein the region identification module (730, 830) comprises:
a coordinate determination sub-module (831), configured to determine several sets of abscissas according to the distribution information of the accumulated values in the histogram, wherein each of the several sets of abscissas comprises a first abscissa and a second abscissa located on the right side of the first abscissa; wherein accumulated values respectively corresponding to the first abscissa and an abscissa on the right side of and adjacent to the first abscissa are larger than a first threshold, and an accumulated value corresponding to an abscissa on the left side of and adjacent to the first abscissa is smaller than a second threshold; and accumulated values respectively corresponding to the second abscissa and an abscissa on the left side of and adjacent to the second abscissa are larger than the first threshold, and an accumulated value corresponding to an abscissa on the right side of and adjacent to the second abscissa is smaller than the second threshold; and
a region identification sub-module (832), configured to, for each of the several sets of abscissas, identify a pixel column where the first abscissa is located as a left edge of a character region, and identify a pixel column where the second abscissa is located as a right edge of the character region.

11. The device of claim 10, wherein the coordinate determination sub-module (831) comprises:
a coordinate identification sub-module (831a), configured to identify a third abscissa in the histogram according to the distribution information of the accumulated values, wherein the third abscissa is an abscissa in the histogram corresponding to a left edge of a character region of the first valid word among the several words, or an abscissa in the histogram corresponding to a right edge of a character region of the last valid word among the several words; and
a coordinate search sub-module (831b), configured to search, starting with the third abscissa in a predetermined direction and based on the distribution information of the accumulated values, the several sets of abscissas.

12. The device of claim 11, wherein in case that the third abscissa is the abscissa in the histogram corresponding to the left edge of the character region of the first valid word among the several words, the coordinate search sub-module (831b) is further configured to:
for an i^{th} set of abscissas, search, starting with the first abscissa within the i^{th} set of abscissas in the histogram and in a direction towards right, a fourth abscissa, wherein accumulated values respectively corresponding to the fourth abscissa and an abscissa on the left side of and adjacent to the fourth abscissa are larger than the first threshold, and an accumulated value corresponding to an abscissa on the right side of and adjacent to the fourth abscissa is smaller than the second threshold; wherein 1 ≤ i ≤ n, i is a positive integer of which an initial value is 1, and n is a number of valid words in the several words; and the first abscissa in the first set of abscissas is the third abscissa;
determine the fourth abscissa as the second abscissa within the i^{th} set of abscissas;
search, starting with the fourth abscissa in the histogram and in the direction towards right, a fifth abscissa, if i<n, wherein accumulated values respectively corresponding to the fifth abscissa and an abscissa on the right side of and adjacent to the fifth abscissa are larger than the first threshold, and an accumulated value corresponding to an abscissa on the left side of and adjacent to the fifth abscissa is smaller than the second threshold; and
set i to i+1, and determine the fifth abscissa as the first abscissa within the i^{th} set of abscissas; or
in case that the third abscissa is the abscissa in the histogram corresponding to a right edge of the character region of the last valid word among the several words, the coordinate search sub-module (831b) is further configured to:
for a j^{th} set of abscissas, search, starting with the second abscissa within the j^{th} set of abscissas in the histogram and in a direction towards left, a sixth abscissa, wherein accumulated values respectively corresponding to the sixth abscissa and an abscissa on the right side of and adjacent to the sixth abscissa are larger than the first threshold, and an accumulated value corresponding to an abscissa on the left side of and adjacent to the sixth abscissa is smaller than the second threshold; 1 ≤ j ≤ n, j is a positive integer of which an initial value is n, and n is a number of valid words in the several words; and the second abscissa within the n^{th} set of abscissas is the third abscissa;
determine the sixth abscissa as the first abscissa within the j^{th} set of abscissas;
search, starting with the sixth abscissa in the histogram and in the direction towards left, a seventh abscissa, if j>0, wherein accumulated values respectively corresponding to the seventh abscissa and an abscissa on the left side of and adjacent to the seventh abscissa are larger than the first threshold, and an accumulated value corresponding to an abscissa on the right side of and adjacent to the seventh abscissa is smaller than the second threshold; and
set j to j-1, and determine the seventh abscissa as the second abscissa within the j^{th} set of abscissas.

13. The device of claim 11, wherein in case that the third abscissa is the abscissa in the histogram corresponding to the left edge of the character region of the first valid word among the several words, the coordinate identification sub-module (831a) is further configured to:
in case that the several words comprise both valid words and invalid words and a first distance between a valid word and an invalid word is larger than a second distance between two adjacent valid words, look up, starting with a predetermined abscissa in the histogram and in the direction towards left, an interval which is the first interval of which a width is larger than the second distance; and determine, an abscissa located on the right side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or
in case that the several words are all valid words, determine, a first one of abscissas located on the left side of the histogram of which the accumulated value of foreground color pixels is larger than the first threshold, as the third abscissas; or
in case that the third abscissa is the abscissa in the histogram corresponding to a right edge of the character region of the last valid word among the several words, the coordinate identification sub-module (831a) is further configured to:
in case that the several words comprise both valid words and invalid words and a first distance between a valid word and an invalid word is larger than a second distance between two adjacent valid words, look up, starting with a predetermined abscissa in the histogram and in the direction towards right, an interval of which a width is larger than the second distance; and determine, an abscissa located on the left side of the interval and of which the accumulated value of foreground color pixels is larger than the first threshold, as the third abscissa; wherein the predetermined abscissa belongs to a predetermined range, which is set according to an empirical value; and the accumulated value of foreground color pixels in the interval is smaller than the second threshold; or
in case that the several words are all valid words, determine, a first one of abscissas located on the right side of the histogram of which the accumulated value of foreground color pixels is larger than the first threshold, as the third abscissas.

14. The device of any one of claims 9 to 13, further comprising:
a second binarization module (840), configured to binarize a targeted image region, to obtain a binarized targeted image region;
a second calculation module (850), configured to calculate, in a horizontal direction, a horizontal histogram for a binarized targeted image region, wherein the horizontal histogram comprises: ordinates of pixels in each row and an accumulated value of foreground color pixels of the pixels in each row;
an edge determination module (860), configured to determine, according to distribution information of the accumulated values in the horizontal histogram, several sets of ordinates, wherein each of the several sets of ordinates comprises a first ordinate and a second ordinate located below the first ordinate; and for each of the several sets of ordinates, identify a pixel row where the first ordinate is located as an upper edge of a row of words, and identify a pixel row where the second ordinate is located as a lower edge of the row of words; accumulated values respectively corresponding to the first ordinate and an ordinate on the lower side of and adjacent to the first abscissa are larger than the first threshold, and an accumulated value corresponding to an ordinate on the upper side of and adjacent to the first ordinate is smaller than the second threshold; and accumulated values respectively corresponding to the second ordinate and an ordinate on the upper side of and adjacent to the second abscissa are larger than the first threshold, and an accumulated value corresponding to an ordinate on the lower side of and adjacent to the second abscissa is smaller than the second threshold; and
the first binarization module is further configured to, for a k^{th} row in the word region, perform the binarizing the word region, wherein m ≥ k ≥ 1, k is a positive integer, and m is a total number of the identified rows.
